(19) Europäisches Patentamt
European Patent Office
Office européen des brevets

(11) EP 4 803 347 A1

(12) **EUROPEAN PATENT APPLICATION**
published in accordance with Art. 153(4) EPC

(43) Date of publication:
**09.09.2026 Bulletin 2026/37**

(21) Application number: **24885959.7**

(22) Date of filing: **18.07.2024**

(51) International Patent Classification (IPC):
***B60L 3/04*** *(2006.01)* ***B60L 50/60*** *(2019.01)*
***B60L 58/10*** *(2019.01)*

(52) Cooperative Patent Classification (CPC):
**B60L 3/04; B60L 50/60; B60L 58/10**

(86) International application number:
**PCT/KR2024/010393**

(87) International publication number:
**WO 2025/095279 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.11.2023 KR 20230150893**
**05.12.2023 KR 20230174593**

(71) Applicant: **LS Mtron Ltd.**
**Anyang-si, Gyeonggi-do 14119 (KR)**

(72) Inventors:
- **ROH, Si Hong**
  **Anyang-si Gyeonggi-do 14119 (KR)**
- **KANG, Dong Woo**
  **Anyang-si Gyeonggi-do 14119 (KR)**
- **KIM, Dong Wook**
  **Anyang-si Gyeonggi-do 14119 (KR)**
- **PARK, Chan**
  **Anyang-si Gyeonggi-do 14119 (KR)**

(74) Representative: **K&L Gates LLP**
**Karolinen Karree**
**Karlstraße 12**
**80333 München (DE)**

# (54) POWER MANAGEMENT SYSTEM OF AGRICULTURAL ELECTRIC WORKING VEHICLE AND RELAY CONTROL METHOD

(57) The present invention relates to a relay control technology for an agricultural electric work vehicle. In a power management system for an agricultural electric work vehicle according to the present invention, a first relay module is provided in a battery pack, a second relay module is provided in a power distributor, and a master controller performs control so that the second relay module is turned off and then the first relay module is turned off when power supply is switched to an OFF state due to a key-off command or a failure. According to the present invention, damage to the first relay module in the battery pack is suppressed, thereby minimizing the repair of the battery pack.

FIG. 2

230
213
200
242a
241a
INVERTER
MOTER
241
INVERTER
PUMP
242
HEATER
243
COOLING FAN
244
COMPRESSOR
245
LDC
246
212c
212a
221a
212d
212b
221b
211
212
210
221
220
222

EP 4 803 347 A1

## Description

## Technical Field

The present invention relates to power management technology for electric tractors, and more particularly, to technology for protecting a relay module in a battery pack.

## Background Art

The advancement of battery technology is rapidly replacing the position that was previously held by internal combustion engines as power sources for mobile devices.

Recently, attempts have been made to use batteries as power sources not only in electric vehicles but also in agricultural work vehicles such as agricultural tractors and combines. In addition, some product lines of agricultural tractors have already reached the commercialization stage.

Unlike electric vehicles, agricultural work vehicles are frequently driven in rough terrain and wetlands with a lot of water. On the other hand, batteries are vulnerable to impact or water ingress. Accordingly, stable protective structures for batteries are particularly important for using batteries as power sources for agricultural work vehicles.

In particular, unlike general vehicles, agricultural work vehicles cannot have separate structures for blocking the water splashing up from the ground on power source sides. Accordingly, the water splashing from the ground may continuously attack batteries during work, so that the waterproofing of batteries in agricultural work vehicles is a significantly important issue.

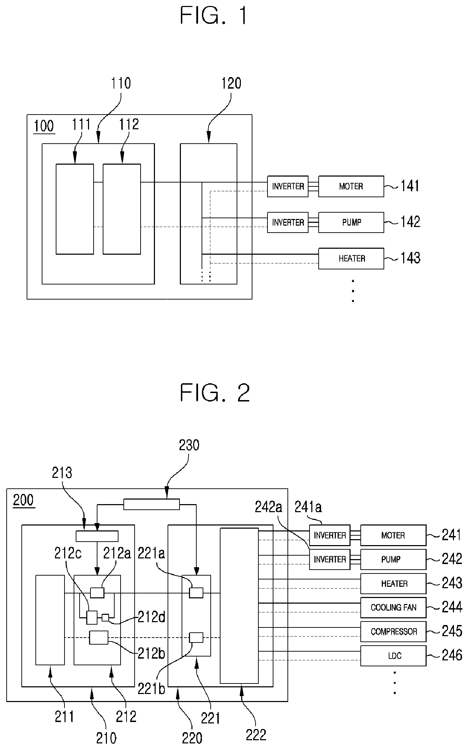

FIG. 1 shows an example of a power management system 100 that can be applied to an agricultural electric work vehicle.

The power management system 100 may include a battery pack 110 and a power distributor 120.

The battery pack 110 contains a battery module 111 and a relay module 112 therein.

The battery module 111 functions as a power source that provides driving force (electric power) by outputting stored electrical energy.

The relay module 112 is commonly abbreviated as a Power Relay Assembly (PRA), and protects the battery module 111 or electrical components 141, 142, and 143 by regulating the power, output from the battery module 111, between the battery module 111 and the power distributor 120. The relay module 112 is an assembly of relays, and connects or disconnects the electricity flowing from the battery module 111 to the power distributor 120 while operating essentially when the power is turned on (ON) or off (OFF). In this case, ON means that the power is connected, OFF means that the power is disconnected, and these terms will be used under the same meanings below.

The power distributor 120 is placed between the relay module 112 and the various electrical components 141, 142, and 143, and appropriately distributes the power of batteries to the various electrical components 141, 142, and 143. In this case, the various electrical components 141, 142, and 143 function as loads that operate while consuming power. That is, the electrical energy stored in the battery module 111 is mainly consumed in the electrical components 141, 142, and 143.

Meanwhile, high-voltage power is required to drive agricultural electric work vehicles. As a result, damage to relays accumulates during the process of connecting and disconnecting high-voltage power. Therefore, relays in agricultural electric work vehicles are consumable parts that often need to be replaced.

Furthermore, when a relay is interrupted due to a system failure or another cause while high-voltage current is flowing, sparks are generated at contacts. Furthermore, when this phenomenon occurs frequently, the relay will be stuck. Therefore, in this case, the relay needs to be replaced.

Meanwhile, in order to repair the relay module 112 or replace the relay, it is necessary to remove a completely sealed battery cover. Thereafter, the battery cover needs to be reinstalled after the repair or replacement has been completed.

However, the removal and reinstallation of the battery cover damage the complete dustproof and waterproof functions structurally incorporated during production. This undermines the stability of agricultural electric work vehicles. Therefore, the repair or replacement of relays acts as a major obstacle to the commercialization of agricultural electric work vehicles.

[Conventional Art Literature]

[Patent Literature]

(Patent Document 1) Korean Patent No. 10-1251812

## Disclosure

### Technical Problem

The present invention was conceived from the quest for technology capable of suppressing damage to relays in a battery pack.

### Technical Solution

A power management system for an agricultural electric work vehicle according to an aspect of the present invention includes: a battery pack configured to supply power; a power distributor configured to distribute and supply the power, output from the battery pack, to individual electrical components; and a master controller configured to be able to control the battery pack and the power distributor; the battery pack includes: a battery module configured to supply the power; and a first relay module configured to relay the power, output from the battery module, to the power distributor and regulate the power output from the battery module; the power distributor includes: a second relay module connected to the first relay module, and configured to regulate the power output from the battery pack; and a distribution circuit configured to distribute the power, output through the second relay module, to the electrical components; and the master controller, when power supply is switched to an OFF state, turns off the second relay module and then performs control so that the first relay module is turned off.

When the power supply is switched to an ON state, the master controller may turn on the second relay module and then perform control so that the first relay module is turned on.

The battery pack may further include a battery management unit configured to manage the battery module and the first relay module while communicating with the master controller; on-off of the first relay module may be controlled by the battery management unit; and on-off of the second relay module may be controlled by the master controller.

When current drops to a predetermined value or lower while the master controller monitors the current in real time, the master controller may turn off the second relay module, and may transmits an OFF message intended to turn off the first relay module to the battery management unit.

The first relay module may include: a first + relay placed on the + line of a power line; a first - relay placed on the - line of the power line; a precharger relay placed in parallel with the first + relay; and a resistor element placed in series with the precharger relay and in parallel with the first + relay.

The battery pack may further include a battery management unit configured to manage the battery module and the first relay module while communicating with the master controller; and the battery management unit, when the power supply is switched to an ON state, may turn on the first - relay and the precharger relay while maintaining the first + relay in an OFF state and then turn off the precharger relay while turning on the first + relay when charging of a capacitor of an inverter is completed.

A relay control method for an agricultural electric work vehicle according to the present invention includes: a monitoring step of monitoring information in real time; a failure diagnosis step of diagnosing whether a failure situation has occurred by analyzing the information obtained in the monitoring step; a first OFF step of turning off a second relay module included in a power distributor (220) when a failure is diagnosed in the failure diagnosis step; and a second OFF step of turning off a first relay module included in a battery pack after the first OFF step.

The monitoring step may include monitoring a current value on a power circuit; and the failure diagnosis step may include diagnosing the failure when the current value on the power circuit drops to a predetermined value or lower.

The first OFF step may include turning off, by a master controller, the second relay module; and the second OFF step may include turning off, by a battery management unit, the first relay module.

The relay control method may further include an OFF message generation and transmission step of generating, by the master controller, an OFF message intended to turn off the first relay module and transmitting, by the master controller, the OFF message to the battery management unit; and the battery management unit may perform the second OFF step when the OFF message is received.

The first OFF step may be performed by a master controller that controls the battery pack and the power distributor; and the second OFF step may be performed by a battery management unit that is included in the power distributor.

### Advantageous Effects

According to the present invention, the following effects are achieved:

First, damage to the battery pack due to repair or replacement may be minimized. Accordingly, this allows the durability of the battery pack to be maintained and the lifespan of the battery pack to be extended.

Second, even when some relays fail, the agricultural electric work vehicle may be operated in emergency mode, so that the agricultural electric work vehicle may be moved directly to a repair shop. This makes repairs due to relay failures easier.

## Description of Drawings

FIG. 1 shows an example of a power management system applicable to an agricultural electric work vehicle;
FIG. 2 is a block diagram of a power management system for an agricultural electric work vehicle according to one embodiment of the present invention; and

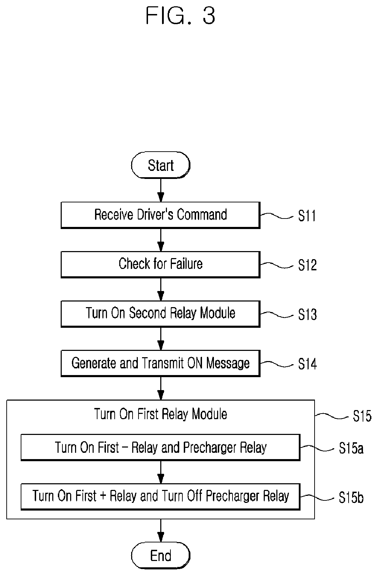

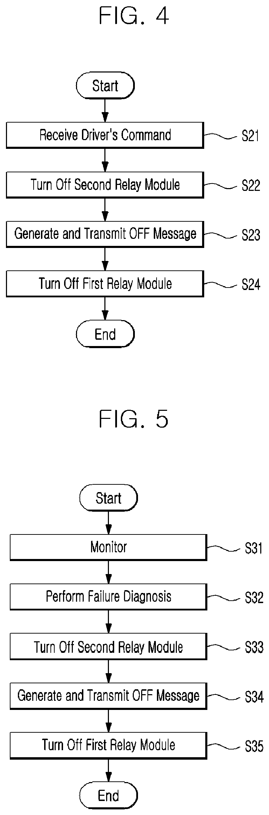

FIGS. 3 to 5 are flowcharts illustrating a power management system for an agricultural electric work vehicle according to the present invention.

## Mode for Invention

Preferred embodiments according to the present invention will be described with reference to the accompanying drawings. However, for the sake of brevity, descriptions of well-known configurations are omitted or abridged as much as possible.

FIG. 2 is a diagram of the configuration of a power management system (hereinafter abbreviated as the 'power management system') 200 for an agricultural electric work vehicle according to one embodiment of the present invention.

The power management system 220 according to the embodiment of FIG. 2 includes a battery pack 210, a power distributor 220, and a master controller 230.

The battery pack 210 supplies power, and regulates the power that is supplied. To this end, the battery pack 210 includes a battery module 211, a first relay module 212, and a battery management unit 213.

The battery module 211 includes cell-unit batteries, and is a power source that supplies high-voltage power.

The first relay module 212 is a PRA placed between the battery module 211 and the power distributor 220.

The first relay module 212 relays the power, output from the battery module 211, to the power distributor 220.

Furthermore, the first relay module 212 protects the battery module 211, electrical components 241 to 246, and the like by regulating the power output from the battery module 211.

More specifically, the first relay module 212 includes a first + relay 212a, a first - relay 212b, a precharger relay 212c, and a resistor element 212d.

The first + relay 212a is placed on the + line of a power line. The first + relay 212a selectively interrupts the + line.

The first - relay 212b is placed on the - line of the power line. The first - relay 212b selectively interrupts the - line.

The precharger relay 212c is placed in parallel with the first + relay 212a. The precharger relay 212c selectively connects the + line to the first + relay 212a.

The resistor element 212d is placed in series with the precharger relay 212c and in parallel with the first + relay 212a. The resistor element 212d lowers the voltage between the + line and the - line.

The precharger relay 212c and the resistor element 212d are provided to protect inverters 241a and 242a.

For example, in the case where power supply is switched to an ON state, when high voltage is directly input to the inverters 241a and 242a, hardware damage may be caused to the inverters 241a and 242a. Accordingly, when the power supply is switched to the ON state, the precharger relay 212c is turned on first and the capacitors of the inverters 241a and 242a are charged. In this case, the first + relay 212a is turned off. Then, once the capacitors of the inverters 241a and 242a have been charged, the precharger relay 212c is turned off and the first + relay 212a is turned on. The phenomenon in which sudden voltage is input to the inverters 241a and 242a is prevented in this manner, so that damage to the inverters 241a and 242a may ultimately be prevented. This operation of the first relay module 212 is controlled by the battery management unit 213 to be described later.

The precharger relay 212c is turned on only when the power supply is switched to an ON state and connects the + line, and is turned off during high-voltage driving.

The battery management unit 213 is commonly referred to as a battery management system (BMS), and manages the battery module 211.

The battery management unit 213 precisely balances the battery cells, and functions to ensure that all battery cells are fully charged.

Furthermore, the battery management unit 213 functions to fully utilize the electrical energy stored in the battery module 211. To this end, the battery management unit 213 monitors the states (current, voltage, temperature, and/or the like) of the battery module 211, and performs control so that the battery module 211 can be maintained and used under optimal conditions.

In particular, the battery management unit 213 in the present invention manages the first relay module 212 while

communicating with the master controller 230.

The battery management unit 213 controls the first relay module 212 during the process of turning the power on/off. That is, the battery management unit 213 controls the ON/OFF operations of the first + relay 212a, first - relay 212b, and precharger relay 212c of the first relay module 212.

The power distributor 220 is commonly referred to as a power distribution unit (PDU), and distributes and supplies the power, output from the battery pack 210, to the individual electrical components 241 to 246. To this end, the power distributor 220 is placed between the battery pack 210 and the various electrical components 241 to 246. More specifically, the power distributor 220 is placed between the first relay module 212 of the battery pack 210 and the various electrical components 241 to 246. In this case, the various electrical components 241 to 246 may vary.

For example, any one electrical component 241 may be a drive motor for operating a drive wheel.

For example, any one electrical component 242 may be a pump motor for operating a hydraulic pump.

For example, any one electrical component 243 may be a heater.

For example, any one electrical component 244 may be a cooling fan.

For example, any one electrical component 245 may be a compressor.

For example, any one electrical component 246 may be a low-voltage converter (LDC) that converts the high voltage of the battery module 211 into a low voltage and charges a 12V low-voltage battery.

Among the electrical components 241 to 246 above, the electrical components 241 and 242 (the drive motor and the pump motor) that operate on AC may additionally require inverters 241a and 242a for converting DC into AC.

The electrical components 241 to 246 above function as loads that consume power during the process of driving the agricultural electric work vehicle.

According to the present invention, the power distributor 220 includes a second relay module 221 and a distribution circuit 222.

The second relay module 221 is a PRA placed between the battery pack 210 and the distribution circuit 222. More specifically, the second relay module 221 is placed between the first relay module 212 of the battery pack 210 and the distribution circuit 222.

The second relay module 221 is connected to the first relay module 212, and ultimately regulates the power output from the battery module 211. To this end, the second relay module 221 includes a second + relay 221a and a second - relay 221b.

The second + relay 221a is connected to the first + relay 212a of the first relay module 211, and is placed on the + line of the power line. The second + relay 221a selectively interrupts the + line.

The second - relay 221b is connected to the first - relay 212b of the first relay module 212, and is placed on the - line of the power line. The second - relay 221b selectively interrupts the - line.

The distribution circuit 222 distributes the power, output through the second relay module 221, to the electrical components 241 to 246.

The master controller 230 is commonly referred to as a vehicle control unit (VCU), and supervises control for the driving, failure diagnosis, and safety mode performance of the agricultural electric work vehicle.

For example, the master controller 230 calculates an optimal target torque suitable for a driving situation based on various types of information regarding vehicle states, including monitoring or a driver's intention, and then operates the drive motor 241.

For example, the master controller 230 performs energy management by taking into consideration the remaining capacity of the battery pack 210.

For example, the mast controller 230 performs failure diagnosis and safety mode performance functions through real-time monitoring.

According to the present invention, the master controller 230 controls the power distributor 220. In particular, the master controller 230 directly controls the operation of the second relay module 221 in the power distributor 220.

Furthermore, the master controller 230 may control the battery pack 210.

According to a preferred example, the master controller 230 may generate an OFF message intended to turn off the first relay module 212. The generated OFF message is then transmitted from the master controller 230 to the battery management unit 213 through CAN communication. Then, the battery management unit 213 turns off the first relay module 212 in accordance with the received OFF message. In this manner, the master controller 230 may also control the battery pack 210 while controlling the power distributor 220.

In the present embodiment, an implementation may be made such that the battery management unit 213 controls the ON/OFF of the first relay module 212 and the master controller 230 directly controls the ON/OFF of the second relay module 221.

For example, when the power supply is switched to an OFF state, the master controller 230 turns off the second relay module 221, and transmits an OFF message to the battery management unit 213. Then, the battery management unit 213 turns off the first relay module 212 in accordance with the OFF message. Accordingly, according to the present invention, when the power supply is switched to an OFF state, the second relay module 221 is turned off first, and then the

first relay module 212 is turned off. That is, the second relay module 221 and the first relay module 212 are turned off sequentially.

For example, the master controller 230 turns off the second relay module 221 when the current on the power circuit drops to a specific current value or lower while monitoring the current in real time. In this case, the master controller 230 also generates an OFF message, and transmits it to the battery management unit 213. The battery management unit 213 turns off the first relay module 212 in accordance with the OFF message.

For example, when the power supply is switched to an ON state, the master controller 230 turns on the second relay module 221 and then performs control so that the first relay module 212 is turned on. More specifically, the master controller 230 turns on the second relay module 221, generates an ON message, and transmits the generated ON message to the battery management unit 213. Then, the battery management unit 213 that has received the ON message turns on the first relay module 212.

Next, the typical ON/OFF of the power performed in the power management system 200 having the configuration described above will be described.

## <Relay Control Method upon Turning On of Power>

### 1. Reception of Driver's Command <S11>

When a driver commands the power to be turned on (a key-on command) to drive the agricultural electric work vehicle, the master controller 230 receives an ON command.

### 2. Failure Checking <S12>

The master controller 230 checks for a failure in the various electrical components 241 to 246 and the electric elements by using power from the 12V low-voltage battery. When there is no failure situation, the master controller 230 performs key start control.

### 3. Turning On of Second Relay Module <S13>

When key start is performed, the master controller 230 first turns on the second relay module 221. Accordingly, the second + relay 221a and the second - relay 221b are switched to an ON state.

### 4. Generation and Transmission of ON Message <S14>

The master controller 230 generates an ON message, and transmits it to the battery management unit 213.

### 5. Turning On of First Relay Module <S15>

A. The battery management unit 230 first turns on the first - relay 212b and the precharger relay 212c in accordance with the ON message <S15a>. Accordingly, the capacitors of the inverters 241a and 242a are charged to a relatively low voltage.

B. Thereafter, when the charging of the capacitors of the inverters 241a and 242a is completed, the battery management unit 213 turns on the first + relay 212a and turns off the precharger relay 212c <S15b>. Accordingly, the electrical components 241 to 246 are electrically connected to the battery module 211, and enter a state in which they can be selectively driven according to a driver's operation.

For reference, prior to the key start, no current flows through the electrical components 241 to 246. Furthermore, in that state, there is no risk of damage to the relays 211a, 211b, 211c, 221a, and 221b during the operation process in which the relays 211a, 211b, 211c, 221a, and 221b are turned on. Accordingly, it may be preferable that the master controller 230 be implemented to turn on either the first relay module 211 or the second relay module 221 first during the key start. That is, the above steps S13 and S14 may be performed in a different order or at the same time.

## <Relay Control Method upon Turning Off of Power>

**1. Reception of Driver's Command <S21>**

When a driver commands the power of the agricultural electric work vehicle to be turned off (a key-off command), the master controller 230 receives an OFF command.

**2. Turning Off of Second Relay Module <S22>**

The master controller 230 first turns off the second relay module 221 in accordance with the OFF command. Accordingly, the second + relay 221a and the second - relay 221b are switched to an OFF state.

**3. Generation and Transmission of OFF Message <S23>**

The master controller 230 generates an OFF message, and transmits it to the battery management unit 213.

**4. Turning Off of First Relay Module <S24>**

The relay management unit 213 turns off the first + relay 212a and the first - relay 212b in accordance with the received OFF message.

In this manner, the second relay module 221 is turned off first and the first relay module 212 is turned off later, so that the damage due to the occurrence of sparks and/or the like may accumulate mainly on a second relay module (221) side. Accordingly, damage to the first relay module 212 may be suppressed relatively.

Depending on the implementation, it may be contemplated that an implementation is made to allow the master controller 230 to monitor the current value on the power circuit, rather than receiving a key-off command in step S21, upon key-off performance.

For example, when the monitored current value is lower than or equal to a predetermined value (e.g., '1A'), the master controller 230 may perform steps S22 to S24.

**<Relay Control Method upon Occurrence of Failure>**

**1. Monitoring <S31>**

A sudden failure may occur during the driving of the agricultural electric work vehicle.

For example, there may occur a failure of an electrical component that is critical to stable driving.

For example, due to a failure in any part, the current value on the power circuit being monitored in real time may have an abnormal value.

Accordingly, even while the agricultural electric work vehicle is in operation, the master controller 230 continuously monitors information such as the current value and/or the like on the electrical components 241 to 246, the electrical elements, or the power circuit. Through the information obtained from this monitoring, the master controller 230 may check for a failure in the electrical components 241 to 246 or the electrical elements.

**2. Failure Diagnosis <S32>**

The master controller 230 diagnoses whether a failure situation has occurred by analyzing the information obtained from the monitoring of step S31.

There may be various types of failures, and the master controller 230 is implemented to diagnose whether a failure is present for each type.

For example, when an abnormal operating value is received from a sensor monitoring the operation of the electrical components 241 to 246, the master controller 230 may diagnose it as a failure.

For example, when the current value on the power circuit being monitored in real time is abnormal (e.g., 1A or lower), the master controller 230 may diagnose it as a failure.

When there is no failure, the master controller 230 repeats steps S21 and S32. However, when a failure is diagnosed, the master controller 230 performs control to perform steps S22 to S35 below.

**3. Turning Off of Second Relay Module <33>**

When the master controller 230 diagnoses a failure situation, it turns off the second relay module 221. Accordingly, the second + relay 221a and the second - relay 221b are switched to an OFF state.

#### 4. Generation and Transmission of OFF Message <S34>

The master controller 230 generates an OFF message, and transmits it to the battery management unit 213.

#### 5. Turning Off of First Relay Module <S35>

The battery management unit 213 turns off the first + relay 212a and the first - relay 212b in accordance with the OFF message.

According to the present invention, even in the event of a failure, the second relay module 221 is turned off first, and the first relay module 212 is turned off later. Accordingly, damage to the first relay module 212 may be suppressed even in the event of a failure.

### <Additional Descriptions>

#### 1. Additional Notes regarding Relay Control

According to the present invention, there are provided two relay modules 212 and 221, which are referred to as PRAs. Among them, the first relay module 212 is provided in the battery pack 210, and the second relay module 221 is provided in the power distributor 220. That is, there are two components capable of turning on/off the power in the power circuit. Accordingly, even when the relay module 212 or 221 on one side is damaged, the agricultural electric work vehicle may be appropriately driven by appropriately controlling the relay module 212 or 221 on the other side. It is obvious that the master controller 230 needs to be implemented to notify a driver of damage when the relay module 212 or 221 on one side is damaged.

Therefore, when the relay module 212 or 221 on one side is damaged but the agricultural electric work vehicle can still be driven, the master controller 230 controls the driving of the agricultural electric work vehicle in emergency mode.

For example, the second relay module 221 may fail because the second + relay 221a of the second relay module 221 is stuck and remains in a constantly ON state. In this case, the master controller 230 may turn on/off the power by controlling the ON/OFF of the first + relay 212a of the first relay module 212.

For example, the first relay module 212 may fail because the first - relay 212b of the first relay module 212 is stuck and remains in a constantly ON state. In this case, the master controller 230 may turn on/off the power by controlling the ON/OFF of the second - relay 221b of the second relay module 221.

Alternatively, either of the relays 212a and 212b of the first relay module 212 may fail, and either of the relays 221a and 221b of the second relay module 221 may fail.

For example, the first - relay 212b of the first relay module 212 may fail to be in a constantly ON state, and the second + relay 221a of the second relay module 221 may fail to be in a constantly ON state. In this case, the master controller 230 may turn on/off the power by controlling the ON/OFF of the first + relay 212a of the first relay module 212 and the ON/OFF of the second - relay 221b of the second relay module 221.

That is, the master controller 230 may diagnose whether the agricultural work vehicle can be driven in the event of a selective failure of the + relay 212a and - relay 212b of the first relay module 212 and the + relay 221a and - relay 221b of the second relay module 221. Furthermore, when the agricultural work vehicle can be driven in emergency mode, the master controller 230 may notify a driver of this and control the driving of the agricultural work vehicle in emergency mode according to the driver's operation.

In the above case, the driver may drive the agricultural work vehicle even in the event of a failure of some of the relays 212a, 212b, 221a, and 221b. Accordingly, when there occurs a failure notification regarding the relay module 212 or 221, the driver may drive the agricultural work vehicle directly to a repair shop and simply repair the relay module 212 or 221, unlike in the past.

However, in the event of a failure of the precharger relay 212c, driving in emergency mode has to be prohibited.

#### 2. Additional Notes regarding Damage from Use

According to the present invention, the second relay module 221 is more prone to damage from use than the first relay module 212. Accordingly, the lifespan of the second relay module 221 is shorter than that of the first relay module 212. Accordingly, the driver may occasionally repair or replace the second relay module 221. However, the second relay module 221 only requires the disassembly and assembly of a distribution box, which is relatively less susceptible to damage to the dustproofness or waterproofness, so that the work is easy and there is no need to worry about damage to the dustproofness or waterproofness of the battery module 211. Furthermore, the replacement cycle for the first relay module 212 is extended accordingly, and thus, the repair of the battery pack 210 may be minimized.

The above-described embodiments have been described merely using preferred examples of the present

invention, and may have various forms of application. Therefore, the present invention should not be understood as being limited only to the content described above. Instead, the scope of the present invention should be understood as the separately described claims and their equivalents.

## Claims

1. A power management system (200) for an agricultural electric work vehicle, the power management system (200) comprising:

   a battery pack (210) configured to supply power;
   a power distributor (220) configured to distribute and supply the power, output from the battery pack (210), to individual electrical components (241 to 246); and
   a master controller (230) configured to be able to control the battery pack (210) and the power distributor (220);
   wherein the battery pack (210) comprises:

      a battery module (211) configured to supply the power; and
      a first relay module (212) configured to relay the power, output from the battery module (211), to the power distributor (220) and regulate the power output from the battery module (211);

   wherein the power distributor (220) comprises:

      a second relay module (221) connected to the first relay module (212), and configured to regulate the power output from the battery pack (210); and
      a distribution circuit (222) configured to distribute the power, output through the second relay module (221), to the electrical components (241 to 246); and

   wherein the master controller (230), when power supply is switched to an OFF state, turns off the second relay module (221) and then performs control so that the first relay module (212) is turned off.

2. The power management system (200) of claim 1, wherein the master controller (230), when the power supply is switched to an ON state, turns on the second relay module (221) and then performs control so that the first relay module (212) is turned on.

3. The power management system (200) of claim 1, wherein:

   the battery pack (210) further comprises a battery management unit (213) configured to manage the battery module (211) and the first relay module (212) while communicating with the master controller (230);
   on-off of the first relay module (212) is controlled by the battery management unit (213); and
   on-off of the second relay module (221) is controlled by the master controller (230).

4. The power management system (200) of claim 3, wherein the master controller (230), when current drops to a predetermined value or lower while the master controller (230) monitors the current in real time, turns off the second relay module (221) and transmits an OFF message intended to turn off the first relay module (212) to the battery management unit (213).

5. The power management system (200) of claim 1, wherein the first relay module (212) comprises:

   a first + relay (212a) placed on a + line of a power line;

   a first - relay (212b) placed on a - line of the power line;

   a precharger relay (212c) placed in parallel with the first + relay (212a); and

   a resistor element (212d) placed in series with the precharger relay (212c) and in parallel with the first + relay (212a).

**6.** The power management system (200) of claim 5, wherein:

the battery pack (210) further comprises a battery management unit (213) configured to manage the battery module (211) and the first relay module (212) while communicating with the master controller (230); and
the battery management unit (213), when the power supply is switched to an ON state, turns on the first - relay (212b) and the precharger relay (212c) while maintaining the first + relay (212a) in an OFF state and then turns off the precharger relay (212c) while turning on the first + relay (212a) when charging of a capacitor of an inverter (241a, 242a) is completed.

**7.** A relay control method for an agricultural electric work vehicle, the relay control method comprising:

a monitoring step <S31> of monitoring information in real time;
a failure diagnosis step <S32> of diagnosing whether a failure situation has occurred by analyzing the information obtained in the monitoring step <S31>;
a first OFF step <S33> of turning off a second relay module (221) included in a power distributor (220) when a failure is diagnosed in the failure diagnosis step <S32>; and
a second OFF step <S35> of turning off a first relay module (212) included in a battery pack (210) after the first OFF step <S33>.

**8.** The relay control method of claim 7, wherein:

the monitoring step <S31> comprises monitoring a current value on a power circuit; and
the failure diagnosis step <S32> comprises diagnosing the failure when the current value on the power circuit drops to a predetermined value or lower.

**9.** The relay control method of claim 7, wherein:

the first OFF step <S33> comprises turning off, by a master controller (230), the second relay module (221); and
the second OFF step <S35> comprises turning off, by a battery management unit (213), the first relay module (212).

**10.** The relay control method of claim 9, further comprising an OFF message generation and transmission step <S34> of generating, by the master controller (230), an OFF message intended to turn off the first relay module (212) and transmitting, by the master controller (230), the OFF message to the battery management unit (213);
wherein the battery management unit (213) performs the second OFF step <S35> when the OFF message is received.

**11.** The relay control method of claim 7, wherein:

the first OFF step <S33> is performed by a master controller (230) that controls the battery pack (210) and the power distributor (220); and
the second OFF step <S35> is performed by a battery management unit (213) that is included in the power distributor (220).

FIG. 1

110
120
100
111
112
INVERTER
MOTER
141
INVERTER
PUMP
142
HEATER
143

FIG. 2

230
213
200
242a
241a
INVERTER
MOTER
241
212c
212a
221a
INVERTER
PUMP
242
HEATER
243
212d
COOLING FAN
244
COMPRESSOR
245
212b
LDC
246
221b
211
212
221
210
220
222

FIG. 3

Start
Receive Driver's Command
S11
Check for Failure
S12
Turn On Second Relay Module
S13
Generate and Transmit ON Message
S14
Turn On First Relay Module
S15
Turn On First – Relay and Precharger Relay
S15a
Turn On First + Relay and Turn Off Precharger Relay
S15b
End

FIG. 4

Start
Receive Driver's Command
S21
Turn Off Second Relay Module
S22
Generate and Transmit OFF Message
S23
Turn Off First Relay Module
S24
End

FIG. 5

Start
Monitor
S31
Perform Failure Diagnosis
S32
Turn Off Second Relay Module
S33
Generate and Transmit OFF Message
S34
Turn Off First Relay Module
S35
End

## INTERNATIONAL SEARCH REPORT

International application No.
**PCT/KR2024/010393**

**A. CLASSIFICATION OF SUBJECT MATTER**

**B60L 3/04**(2006.01)i; **B60L 50/60**(2019.01)i; **B60L 58/10**(2019.01)i

According to International Patent Classification (IPC) or to both national classification and IPC

**B. FIELDS SEARCHED**

Minimum documentation searched (classification system followed by classification symbols)

B60L 3/04(2006.01); B60L 11/02(2006.01); B60L 11/18(2006.01); B60L 3/00(2006.01); B60L 50/50(2019.01); B60L 50/51(2019.01); B60L 58/19(2019.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 전력 분배(power distribution), 릴레이모듈(relay module), 전환(conversion)

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0086294 A (EROOM AT CO., LTD.) 22 July 2019 (2019-07-22) See paragraphs [0017], [0022] and [0030]; and figures 2-3. | 1-11 |
| A | KR 10-2018-0023140 A (HYUNDAI MOTOR COMPANY) 07 March 2018 (2018-03-07) See paragraphs [0034]-[0044]; and figure 1. | 1-11 |
| A | KR 10-2012-0005729 A (V-ENS) 17 January 2012 (2012-01-17) See paragraphs [0030]-[0044]; and figure 2. | 1-11 |
| A | KR 10-2528400 B1 (SUNG WOO HITECH CO., LTD.) 03 May 2023 (2023-05-03) See paragraphs [0039]-[0053]; and figure 1. | 1-11 |
| A | KR 10-2016-0052134 A (HYUNDAI MOTOR COMPANY et al.) 12 May 2016 (2016-05-12) See paragraphs [0036]-[0050]; and figure 1. | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 October 2024** | **29 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/010393**

| Patent document cited in search report | Publication date (day/month/year) | Patent family member(s) | Publication date (day/month/year) |
|---|---|---|---|
| KR 10-2019-0086294 A | 22 July 2019 | KR 10-2037263 B1 | 26 November 2019 |
| KR 10-2018-0023140 A | 07 March 2018 | None | |
| KR 10-2012-0005729 A | 17 January 2012 | CN 103097177 A | 08 May 2013 |
| | | CN 103097177 B | 02 September 2015 |
| | | KR 10-2012-0081824 A | 20 July 2012 |
| | | KR 10-2012-0081825 A | 20 July 2012 |
| | | US 2013-0116875 A1 | 09 May 2013 |
| | | US 8655535 B2 | 18 February 2014 |
| | | WO 2012-005554 A2 | 12 January 2012 |
| | | WO 2012-005554 A3 | 05 April 2012 |
| KR 10-2528400 B1 | 03 May 2023 | CN 116022034 A | 28 April 2023 |
| | | DE 102022126814 A1 | 27 April 2023 |
| | | KR 10-2528400 B9 | 04 August 2023 |
| | | US 12036891 B2 | 16 July 2024 |
| | | US 2023-0130454 A1 | 27 April 2023 |
| KR 10-2016-0052134 A | 12 May 2016 | KR 10-1646374 B1 | 05 August 2016 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 101251812